**Europäisches Patentamt**

(19) **European Patent Office**

**Office européen des brevets**

(11) Veröffentlichungsnummer: **0 186 653**
**B1**

(12) # EUROPÄISCHE PATENTSCHRIFT

(45) Veröffentlichungstag der Patentschrift:
**25.01.89**

(51) Int. Cl.⁴: **C 21 C 5/38**

(21) Anmeldenummer: **85890279.4**

(22) Anmeldetag: **11.11.85**

---

(54) **Verfahren zur Herstellung eines Mischgases sowie Anlage zur Durchführung des Verfahrens.**

---

(30) Priorität: **19.11.84 AT 3652/84**

(43) Veröffentlichungstag der Anmeldung:
**02.07.86 Patentblatt 86/27**

(45) Bekanntmachung des Hinweises auf die Patenterteilung:
**25.01.89 Patentblatt 89/4**

(84) Benannte Vertragsstaaten:
**BE DE FR GB IT LU**

(56) Entgegenhaltungen:
**AT-B-276 451**
**DE-A-2 525 427**
**DE-A-2 911 692**
**DE-A-3 033 238**
**DE-B-1 277 283**
**DE-B-2 239 578**
**DE-C-895 208**
**FR-A-1 223 518**

(73) Patentinhaber: **VOEST- ALPINE INDUSTRIEANLAGENBAU GESELLSCHAFT M.B.H., Turmstrasse 44, A-4020 Linz (AT)**

(72) Erfinder: **Der Erfinder hat auf seine Nennung verzichtet**

(74) Vertreter: **Wolfram, Gustav, Dipl.- Ing., Schwindgasse 7 P.O. Box 205, A-1041 Wien (AT)**

EP 0 186 653 B1

## Beschreibung

Die Erfindung betrifft ein Verfahren zur Herstellung eines Mischgases aus dem Prozeßgas eines kontinuierlich arbeitenden Gaserzeugers und aus dem diskontinuierlich anfallenden Abgas mindestens eines Sauerstoffblaskonverters, sowie eine Anlage zur Durchführung des Verfahrens.

Im besonderen ist die Erfindung für Hüttenwerke bestimmt, die sowohl über Reduktions- und Schmelzvergasungsaggregate zur Gewinnung von Roheisen als auch ober Frischaggregate zur Umwandlung von Roheisen in Stahl verfügen.

Normalerweise sind für die anfallenden Prozeßgase, d.h. für das Reduktionsgas bzw. Topgas aus den Reduktionsanlagen, und für die Konverterabgase getrennte Einrichtungen zum Auffangen, zur Entstaubung und Entsäuerung erforderlich, weil das Topgas aus der Reduktionsanlage mit höherem Druck, etwa 2 bis 5 bar, und einer Temperatur von 300 bis 400°C anfällt, während das Konvertergas mit geringem Druck von 0,01 bar und einer Temperatur von etwa 1100°C anfällt. In der Regel ist es aufwendig, die Konverterabgase hinsichtlich ihres chemischen Energieinhaltes (CO-Gehalt und $H_2$-Gehalt) zu verwerten. Vielfach werden diese Gase daher abgefackelt und belasten die Umwelt.

Es ist bekannt, zur Bildung eines Mischgases aus einem Gas mit geringem Druck und einem Gas mit höherem Druck einen Ejektor einzusetzen (DE-A -2 911 692, DE-C-895 208), wobei das Gas mit höherem Druck als Treibgas dient, während das Gas mit dem geringeren Druck angesaugt wird.

Nach der DE-A-3 033 238 ist es bereits bekannt, Raffineriegase aus Niederdrucksystemen in ein mit höherem Druck betriebenes Heizgasnetz einzuspeisen, wobei die Raffineriegase in einem Gasstrahlverdichter unter Verwendung von in der Raffinerie anfallenden, für das Heizgasnetz vorgesehenen Gasen als Treibgas auf den höheren Druck des Heizgasnetzes verdichtet und dann eingemischt werden.

Bei der Mischung eines Prozeßgases mit dem Abgas eines Sauerstoffblaskonverters, die Ziel der vorliegenden Erfindung ist, ist infolge des diskontinuierlichen Anfalles des Abgases des Sauerstoffblaskonverters mit Schwierigkeiten zu rechnen, insbesondere wegen des vor Blasbeginn im Abgassystem des Konverters und während des Blasbeginnes sowie gegen Blasende vorhandenen Sauerstoffes.

Die Erfindung bezweckt die Überwindung der geschilderten Schwierigkeiten und stellt sich die Aufgabe, kontinuierlich anfallende Hochdruck-Prozeßgase mit diskontinuierlich anfallendem Niederdruck-Konverterabgas zu vereinigen, so daß das aus dem kontinuierlich anfallenden Prozeßgas und dem diskontinuierlich anfallenden Konverterabgas anfallende Mischgas direkt an Verbraucher unter Vermeidung von Explosionsgefahr abgegeben werden kann.

Diese Aufgabe wird bei einem Verfahren der eingangs bezeichneten Art erfindungsgemäß gelöst, indem das mit geringem Druck anfallende Abgas des Sauerstoffblaskonverters auf Sauerstoff-Freiheit überprüft wird und bei Vorhandensein von Sauerstoff abgeblasen wird, bei Abwesenheit von Sauerstoff hingegen in das mit höherem Druck anfallende Prozeßgas des Gaserzeugers über einen Gasstrahlejektor eingesaugt wird, wobei das Prozeßgas als Treibgas dient, und das Mischgas anschließend einer Entstaubung und gegebenenfalls einer $CO_2$-Wäsche unterzogen wird.

Vorteilhaft wird als Prozeßgas das mit einem Druck von 2 bis 5 bar anfallende Topgas einer aus Reduktionsschachtofen und Einschmelzvergaser bestehenden Anlage zur Gewinnung von Roheisen aus eisenoxidhältigem und kohlenstoffhältigem Ausgangsmaterial verwendet, wobei gegebenenfalls das Abgas mehrerer, in versetztem Rhythmus arbeitender Sauerstoffblaskonverter in das Topgasnetz eingespeist wird.

Auch Hochofengas kann als Prozeßgas verwendet werden.

Die Erfindung umfaßt des weiteren eine Anlage zur Durchführung des Verfahrens, mit einer einen Reduktionsschachtofen und Einschmelzvergaser umfassenden Anlage zur Gewinnung von Roheisen und mindestens einem Sauerstoffblaskonverter zur Umwandlung des Roheisens in Stahl, wobei ein Prozeßgas-Leitungssystem des Reduktionsschachtofens mit der bzw. den Abgasleitungen des bzw. der Konverter über einen Ejektor verbunden ist, durch den das Konverterabgas in das Prozeßgas-Leitungssystem einführbar ist, Entstaubungs- und Wascheinrichtungen für das aus Prozeßgas und Konverterabgas gebildete Mischgas und Sicherheitseinrichtungen zur Verhinderung des Eintrittes von Sauerstoff in das Prozeßgas vorgesehen sind.

Die Sicherheitseinrichtungen umfassen vorteilhaft

a) eine in einem Kühlkamin des Sauerstoffblaskonverters angeordnete, von Mischgas. und Luft gespeiste Pilotflamme;

b) eine unterhalb der Pilotflamme in den Kühlkamin des Konverters mündende Mischgasleitung mit einem Auf/Zu-Ventil;

c) ein Meßgerät im Kühlkamin zur Messung von etwa vorhandenem Sauerstoff;

d) ein vor dem Ejektor angeordnetes Absperrorgan;

e) ein in Flußrichtung des Konverterabgases vor dem Absperrorgan angeordnetes Absperrorgan;

f) ein zweites Meßgerät zur Messung eines etwa vorhandenen Sauerstoffgehaltes vor dem Absperrorgan und

g) eine Schalteinrichtung zur Betätigung des Absperrorgans.

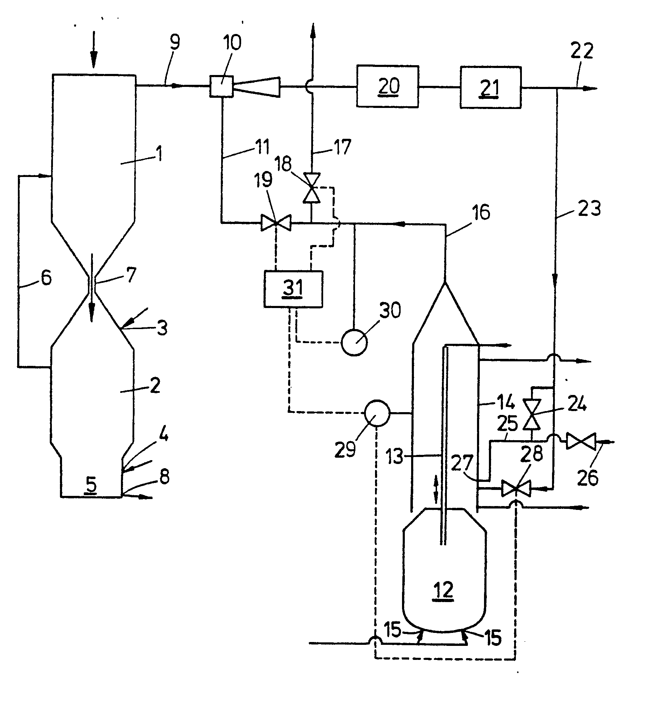

Das erfindungsgemäße Verfahren und eine zu seiner Durchführung verwendbare Anlage sind in der Zeichnung schematisch erläutert.

Mit 1 ist ein Reduktionsschachtofen bezeichnet, dem von oben her als Möller eisenoxidhältiges körniges Material, aus einem Vorratsbehälter kontinuierlich zugeführt wird. Der Reduktionsschachtofen ist mit einem mit 2 bezeichneten Einschmelzvergaser integral verbunden. Dieser Einschmelzvergaser weist bei 3 eine Einführungsleitung für kohleartiges Material und bei 4 eine Einführungsleitung für sauerstoffhältiges Gas auf. Der untere Teil 5 des Einschmelzvergasers ist als Auffangbehälter ausgebildet.

Das im Einschmelzvergaser aus dem kohleartigen Material und dem Sauerstoff gebildete Reduktionsgas wird über die Leitung 6 dem Reduktionsschachtofen 1 zugeführt, wo das eisenoxidhältige Material zu Eisenschwamm reduziert wird. Der Eisenschwamm wird durch eine Austragvorrichtung 7 in den Einschmelzvergaser gefördert, wo er - gegebenenfalls unter Ausbildung eines fluidisierten Bettes - überhitzt, aufgekohlt und geschmolzen wird. Flüssiges Roheisen und Schlacke sammeln sich im unteren Teil 5 und werden über ein Stichloch 8 abgezogen.

Aus dem oberen Teil des Reduktionsschachtofens wird das Reaktionsgas, das sogenannte "Topgas", durch die Leitung 9 abgezogen, wobei es eine Temperatur von 300 bis 400°C und einen Druck von 2 bis 5 bar aufweist. Das Topgas strömt durch den Ejektor 10 als Strahlgas und saugt aus der Leitung 11 Konverterabgas an. Das Konverterabgas wird im Sauerstoffblaskonverter 12 bei der Umwandlung von Roheisen in Stahl gebildet; die Umwandlung erfolgt durch Aufblasen und/oder Einblasen von Sauerstoff mittels der heb- und senkbaren Sauerstoffblaslanze 13 und/oder Bodendüsen 15.

Die Mündung des Konverters ist durch eine wassergekühlte Kaminhaube mit einem feststehenden Abgaskühlkamin 14 verbunden. Vom oberen Teil des Abgaskühlkamines 14 strömt das Konverterabgas durch die Leitung 16 ab, wobei es eine Temperatur von etwa 900 bis 1100°C und einen Druck von etwa 0,01 bar aufweist.

In die Leitung 16 ist eine Abblasleitung 17 eingebunden, in welcher ein geeignetes Absperrorgan 18 eingebaut ist. In der Ansaugleitung 11 als Fortsetzung der Leitung 16 ist nach der Abzweigung der Abblasleitung 17 ebenfalls ein geeignetes Absperrorgan 19 eingebaut.

Das Mischgas, welches durch Einsaugen des Konverterabgases in das Topgas entsteht, wird hinter dem Ejektor in einer Entstaubungseinrichtung 20 entstaubt und gegebenenfalls in einer Wascheinrichtung 21 kohlendioxidfrei gewaschen. Es wird dann durch die Leitung 22 an Verbraucher abgegeben. Eine Abzweigleitung 23 führt zurück zum Konverter und wird dort weiter verzweigt. Einerseits führt eine Mischgasleitung 25 über das Ventil 24 in den Kamin, wo es zusammen mit Luft aus der Luftleitung 26 eine Pilotflamme 27 speist; andererseits führt eine Mischgasleitung über das Mischgasventil 28 unmittelbar unter der Mündung der Pilotgasflamme ebenfalls in den Kamin.

Weiters sind an der Anlage noch zusätzliche Sicherheitseinrichtungen vorhanden, nämlich zwei Meßgeräte 29 und 30 sowie eine Schalteinrichtung 31. Das Meßgerät 29 besitzt eine Sauerstoffmeßstelle innerhalb des Kamins 14, das Meßgerät 30 eine Sauerstoffmeßstelle in der Leitung 16. Mit diesen Meßgeräten wird, wie später noch genauer beschrieben wird, ein eventueller Sauerstoffgehalt ermittelt, wobei je nach den Ergebnissen die Absperrorgane 18 und 19 gegenläufig betätigt werden, um sicherzustellen, daß kein Sauerstoff in die Ansaugleitung 11 gelangt.

Das erfindungsgemäße Verfahren wird an einem Beispiel näher erläutert, welches in einer Anlage, wie in der schematischen Zeichnung dargestellt, durchgeführt wurde:

Topgas mit einer Zusammensetzung von 45 % CO, 30 % $CO_2$, 15 % $H_2$, 8 % $H_2O$ und 2 % Stickstoff wird mit einem Druck von 4 bar und einer Temperatur von 350°C aus einem Reduktions-Einschmelzvergaser-Aggregat, welches eine Kapazität von 40 t/h aufweist, kontinuierlich in einer Menge von 1250 Nm³/min durch die Leitung 9 abgezogen.

Konverterabgas mit einer Zusammensetzung von 15 % $CO_2$, 75 % CO und 10 % $N_2$, mit einem Druck von 0,01 bar und einer Temperatur von 1100°C fällt als Nebenprodukt der Stahlerzeugung aus einem 25 t Sauerstoffblaskonverter (Rohstahlerzeugungsleistung ca. 40 t pro Stunde) in einer durchschnittlichen Menge von 48 Nm³/min an, wobei die Chargendauer 32 bis 36 min, die Sauerstoffblaszeit 14 bis 16 min und die Gasgewinnungszeit 10 bis 12 min betragen, d.h. der effektive Gasanfall ergibt sich während der Gasgewinnungszeit beim Frischen mit 110 Nm³/min.

Das im Konverter umzuwandelnde Roheisen wird aus dem Einschmelzvergaser entnommen und hat einen Kohlenstoffgehalt von etwa 3 %.

Aus den angegebenen Mengenverhältnissen ergibt sich folgende Zusammensetzung des Mischgases:

$$
\begin{array}{rll}
644 & Nm^3\ CO & = 47\ \%\ CO \\
392 & Nm^3\ CO_2 & = 29\ \%\ CO_2 \\
188 & Nm^3\ H_2 & = 14\ \%\ H_2 \\
100 & Nm^3\ H_2O & = 7\ \%\ H_2O \\
\underline{36} & \underline{Nm^3\ N_2} & = 3\ \%\ N_2 \\
1360 & Nm^3\ Mischgas & = 100\ \%
\end{array}
$$

wenn die angegebenen 1250 Nm³ Topgas/min mit 110 Nm³ Konverterabgas/min gemischt werden.

Da damit das Mischungsverhältnis CO : $H_2$ gegenüber der ursprünglichen Topgaszusammensetzung nur geringfügig geändert wird und die Schwankungen der Zusammensetzung im gebildeten Mischgas sehr gering sind, ist ein Gasspeicher nicht erforderlich.

Die diskontinuierliche Einspeisung des Konverterabgases in das Topgasnetz erfordert jedoch, wie schon vorher gesagt wurde, Sicherheitsmaßnahmen, um zu vermeiden, daß Sauerstoff über die Konverterabgasleitung in das Topgasnetz gelangt, was das Risiko von Explosionen mit sich bringen könnte.

Diese Sicherheitseinrichtungen umfassen:

a)    eine im Kühlkamin angeordnete, von Mischgas und Luft gespeiste Pilotflamme 27;

b)    eine unterhalb der Pilotflamme 27 in den Kühlkamin des Konverters mündende Mischgasleitung mit einem Auf/Zu-Ventil 28;

c)    ein Meßgerät 29 im Kühlkamin 14 zur Messung von etwa vorhandenem Sauerstoff;

d)    ein vor dem Ejektor 10 angeordnetes Absperrorgan 19;

e)    ein in Flußrichtung des Konverterabgases vor dem Absperrorgan 19 angeordnetes Absperrorgan 18;

f)    ein zweites Meßgerät 30 zur Messung eines etwa vorhandenen Sauerstoffgehaltes vor dem Absperrorgan 18 und

g)    eine Schalteinrichtung 31 zur Betätigung der Absperrorgane 18 und 19.

Die Funktionen der Sicherheitseinrichtungen in den einzelnen Betriebsphasen des Konverters sind die folgenden:

Die den Meßgeräten 29 und 30 zugeordneten $O_2$-Meßstellen können von einem Leitstand aus aktiviert und inaktiviert werden. In nichtaktiviertem Zustand der $O_2$-Meßstellen ist das Absperrorgan 19 geschlossen, das Absperrorgan 18 offen und das Mischgasventil 28 mit Auf/Zu-Funktion geschlossen. Die Pilotflamme 27 brennt in allen Betriebsphasen.

In aktiviertem Zustand steht die im Kühlkamin angeordnete $O_2$-Meßstelle über das Meßgerät 29 mit dem Mischgasventil 28 und weiters über die Schalteinrichtung 31 mit dem Absperrorgan 19 und der Abblasleitung 17 in Eingriff. Die vor dem Absperrorgan 18 angeordnete $O_2$-Meßstelle steht über das Meßgerät 30 und über die Schalteinrichtung 31 nur mit dem Absperrorgan 19 und dem Absperrorgan 18 in Eingriff. Die mit dem Meßgerät 30 in Verbindung stehende $O_2$-Meßstelle erfüllt eine reine Sicherheitsfunktion, falls die mit dem Meßgerät 29 in Verbindung stehende Meßstelle ausfallen sollte. Bei Anzeige von Sauerstoff im Konverterabgas wird das Absperrorgan 19 geschlossen. Das Absperrorgan 18 und das Mischgasventil 28 werden geöffnet und offen gehalten.

Aus diesen Verknüpfungen ergibt sich die Betriebsweise. Während Blaspausen sind die $O_2$-Meßstellen nicht aktiviert. Das Absperrorgan 19 ist geschlossen, das Absperrorgan 18 offen, das Mischgasventil 28 geschlossen und die Pilotflamme 27 brennt. Luft, die über die Kaminmündung durch den im Kamin 14 herrschenden Zug angesaugt wird, entweicht über die Abblasleitung 17.

Nach dem Chargieren des Konverters, d.h. vor Blasbeginn, werden die $O_2$-Meßstellen vom Leitstand aus aktiviert. Durch den vorhandenen Sauerstoff im Abgassystem bleibt das Absperrorgan 19 geschlossen und das Absperrorgan 18 geöffnet. Das Mischgasventil 28 wird geöffnet. Mischgas tritt in den Kamin ein und verbrennt mit dem Sauerstoff, der an der Konvertermündung eintretenden Umgebungsluft zu $CO_2$ und $H_2O$, wobei die Zündung durch die Pilotflamme 27 erfolgt.

Der im Abgassystem vorhandene Sauerstoff wird durch die Verbrennung verbraucht. Die dabei entstehende Wärme wird im Abgaskühlkamin 14 genutzt. Nun wird Frischsauerstoff dem Konverter von oben mittels der Blaslanze 13 und/oder über Bodendüsen 15 zugeführt.

Sobald im Konverterabgasnetz kein Sauerstoff mehr angezeigt wird, wird das Absperrorgan 19 geöffnet und das Absperrorgan 18 und das Mischgasventil 28 geschlossen. Die Gaszufuhr über die Pilotflamme 27 bleibt weiter aufrecht. Sobald gegen Blasende die Abgasmenge abnimmt und wieder Sauerstoff im Abgas angezeigt wird, wird das Absperrorgan 19 geschlossen und das Absperrorgan 18 und das Mischgasventil 28 geöffnet.

Anschließend werden die $O_2$-Meßstellen vom Leitstand aus wieder deaktiviert und der gleiche Zustand, wie anfangs für Blaspausen beschrieben, hergestellt, d.h. das Mischgasventil 28 wird wieder geschlossen.

Das erfindungsgemäße Verfahren kann sinngemäß auch zur Koppelung von Hoch- und Niederdruck-Abgassystemen anderer metallurgischer Aggregate angewandt werden.

## Patentansprüche

1. Verfahren zur Herstellung eines Mischgases aus dem Prozeßgas eines kontinuierlich arbeitenden Gaserzeugers (1, 2) und aus dem diskontinuierlich anfallenden Abgas mindestens eines Sauerstoffblaskonverters (12), beispielsweise beim Frischen von Roheisen mit Sauerstoff, wobei das mit geringem Druck anfallende Abgas des Sauerstoffblaskonverters (12) auf Sauerstoff-Freiheit überprüft wird und bei Vorhandensein von Sauerstoff abgeblasen wird, bei Abwesenheit von Sauerstoff hingegen in das mit höherem Druck anfallende Prozeßgas des Gaserzeugers (1, 2) über einen Gasstrahlejektor (10) eingesaugt wird, wobei das Prozeßgas als Treibgas dient, und das Mischgas anschließend einer Entstaubung und gegebenenfalls einer $CO_2$-Wäsche unterzogen wird.

2. Verfahren nach Anspruch 1, dadurch gekennzeichnet, daß als Prozeßgas das mit einem Druck von 2 bis 5 bar anfallende Topgas einer aus Reduktionsschachtofen (1) und Einschmelzvergaser (2) bestehenden Anlage zur Gewinnung von Roheisen aus eisenoxidhältigem und kohlenstoffhältigem Ausgangsmaterial verwendet wird, wobei gegebenenfalls das Abgas mehrerer, in versetztem Rhythmus arbeitender Sauerstoffblaskonverter (12) in das Topgasnetz eingespeist wird.

3. Verfahren nach Anspruch 1, dadurch gekennzeichnet, daß als Prozeßgas Hochofengas verwendet wird.

4. Anlage zur Durchführung des Verfahrens nach Anspruch 1, 2 oder 3, mit einer einen Reduktionsschachtofen (1) und Einschmelzvergaser (2) umfassenden Anlage zur Gewinnung von Roheisen und mindestens einem Sauerstoffblaskonverter (12) zur Umwandlung des Roheisens in Stahl, wobei ein Prozeßgas-Leitungssystem des Reduktionsschachtofens (1) mit der bzw. den Abgasleitungen des bzw. der Konverter (12) über einen Ejektor (10) verbunden ist, durch den das Konverterabgas in das Prozeßgas-Leitungssystem einführbar ist, Entstaubungs- (20) und Wascheinrichtungen (21) für das aus Prozeßgas und Konverterabgas gebildete Mischgas und Sicherheitseinrichtungen zur Verhinderung des Eintrittes von Sauerstoff in das Prozeßgas vorgesehen sind.

5. Anlage nach Anspruch 4, dadurch gekennzeichnet, daß die Sicherheitseinrichtungen umfassen:

a) eine in einem Kühlkamin (14) des Sauerstoffblaskonverters angeordnete, von Mischgas und Luft gespeiste Pilotflamme (27);

b) eine unterhalb der Pilotflamme (27) in den Kühlkamin des Konverters mündende Mischgasleitung mit einem Auf/Zu-Ventil (28);

c) ein Meßgerät (29) im Kühlkamin (14) zur Messung von etwa vorhandenem Sauerstoff;

d) ein vor dem Ejektor (10) angeordnetes Absperrorgan (19);

e) ein in Flußrichtung des Konverterabgases vor dem Absperrorgan (19) angeordnetes Absperrorgan (18);

f) ein zweites Mengerät (30) zur Messung eines etwa vorhandenen Sauerstoffgehaltes vor dem Absperrorgan (18) und

g) eine Schalteinrichtung (31) zur Betätigung des Absperrorgans (19).

**Claims**

1. Method of producing a mixed gas from the process gas of a continuously operating gasifier (1, 2) and from the discontinuously accruing off-gas of at least one oxygen blowing converter (12), e.g. when refining pig iron with oxygen, wherein the off-gas of the oxygen blowing converter (12) accruing at low pressure is checked for freedom from oxygen and is blown off in case of presence of oxygen, but in case of absence of oxygen is sucked into the process gas of the gasifier (1, 2) accruing at higher pressure via a gas jet ejector (10), the process gas serving as power gas, and the mixed gas subsequently is subjected to dedusting and, if desired, to a CO$_2$-washing.

2. Method according to claim 1, characterised in that the top gas accruing at a pressure of from 2 to 5 bar from a plant for recovering pig iron from iron oxide containing and carbon containing starting material and comprised of a reduction shaft furnace (1) and a meltdown gasifier (2) is used as the process gas, wherein possibly the off-gas of a number of oxygen blowing converters (12) operating alternately is fed into the top gas network.

3. Method according to claim 1, characterised in that blast furnace gas is used as the process gas.

4. Plant for carrying out the method according to claim 1, 2 or 3, with a plant comprising a reduction shaft furnace (1) and a melt-down gasifier (2) for recovery of pig iron and at least one oxygen blowing converter (12) for converting the pig iron into steel, wherein a process gas duct system of the reduction shaft furnace (1) is connected with the off-gas duct(s) of the converter(s) (12) via an ejector (10), through which the converter off-gas is feedable into the process gas duct system, dedusting (20) and washing means (21) are provided for the mixed gas formed by the process gas and the converter off-gas, and safety means are provided for preventing the entry of oxygen into the process gas.

5. Plant according to claim 4, characterised in that the safety means comprise:

a) a pilot flame (27) arranged in a cooling chimney (14) of the oxygen blowing converter and fed by mixed gas and air;

b) a mixed gas duct entering into the cooling chimney of the converter below the pilot flame (27) and having an on/off valve (28);

c) a measuring instrument (29) in the cooling chimney (14) for measuring oxygen possibly present;

d) a closing means (19) arranged in front of the ejector (10);

e) a closing means (18) arranged in front of the closing means (19) in the flow direction of the converter off-gas;

f) a second measuring instrument (30) for measuring an oxygen content possibly present before the closing means (18) and

g) a switch means (31) for actuating the closing means (19).

**Revendications**

1. Procédé de production d'un gaz mixte à partir d'un gaz de traitement d'un générateur de gaz à fonctionnement continu (1, 2) et du gaz d'échappement, produit de façon discontinue, d'au moins un convertisseur à soufflage d'oxygène (12), par exemple dans le cas de l'affinage de la fonte par l'oxygène, le gaz d'échappement du convertisseur à soufflage d'oxygène (12), qui se présente avec une faible pression, étant soumis à un contrôle d'absence d'oxygène et étant éjecté en présence d'oxygène tandis que, en l'absence d'oxygène, il est injecté par aspiration, par l'intermédiaire d'un éjecteur à jet de gaz (10), dans le gaz de traitement du générateur de gaz (1, 2) qui se présente à une pression plus élevée, le gaz de traitement servant ici de gaz d'entraînement et le gaz mixte étant ensuite soumis à un dépoussiérage et éventuellement à un lavage du $CO_2$.

2. Procédé selon la revendication 1, caractérisé en ce qu'on utilise, comme gaz de traitement, le gaz de gueulard, produit sous une pression de 2 à 5 bars, d'une installation de production de fonte à partir d'une matière de départ contenant de l'oxyde de fer et du carbone, composée d'un four à cuve à réduction (1) et d'un gazéificateur à fusion (2), le gaz d'échappement de plusieurs convertisseurs à soufflage d'oxygène (12), qui travaillent avec un rythme décalé, étant éventuellement injecté dans le réseau de gaz de gueulard.

3. Procédé selon la revendication 1, caractérisé en ce qu'on utilise du gaz de haut-fourneau en qualité de gaz de traitement.

4. Installation pour la mise en oeuvre du procédé selon la revendication 1, 2 ou 3, qui comprend une installation comprenant elle-même un four à cuve à réduction (1) et un gazéificateur à fusion (2), et destinée à la production de fonte, et au moins un convertisseur à soufflage d'oxygène (12) destiné à transformer la fonte en acier, et dans laquelle un système de conduites de gaz de traitement du four à cuve à réduction (1) est relié à la conduite de gaz d'échappement du convertisseur (12), ou aux conduites de gaz d'échappement des convertisseurs (12), par l'intermédiaire d'un éjecteur (10) au moyen duquel le gaz d'échappement de convertisseur peut être injecté dans le système de conduite de gaz de traitement, des dispositifs de dépoussiérage (20) et de lavage (21) pour le traitement du gaz mixte formé à partir du gaz de traitement et du gaz d'échappement du convertisseur, et des dispositifs de sécurité destinés à éviter que de l'oxygène se mélange au gaz de traitement.

5. Installation selon la revendication 4, caractérisée en ce que les dispositifs de sécurité comprennent:

a) une flamme pilote (27) prévue dans une cheminée de refroidissement (14) du convertisseur à soufflage d'oxygène, et qui est alimentée en gaz mixte et en air;

b) une conduite de gaz mixte qui débouche dans la cheminée de refroidissement du convertisseur, au-dessous de la flamme pilote (27) et qui est équipée d'une vanne tout ou rien (28);

c) un appareil de mesure (29) placé dans la cheminée de refroidissement (14) et destiné à mesure l'oxygène éventuellement présent;

d) un organe d'arrêt (19) intercalé en amont de l'éjecteur (10);

e) un organe d'arrêt (18) intercalé en amont du premier organe d'arrêt (19) dans le sens de l'écoulement du gaz d'échappement du convertisseur;

f) un deuxième appareil de mesure (30) destiné à mesurer la teneur en oxygène éventuellement présent en amont de l'organe d'arrêt (18); et

g) un dispositif de commutation (31) pour la manoeuvre de l'organe d'arrêt (19).